(19) Europäisches Patentamt
European Patent Office
Office européen des brevets

(11) **EP 3 396 840 B1**

(12) **EUROPEAN PATENT SPECIFICATION**

(45) Date of publication and mention
of the grant of the patent:
**04.03.2020 Bulletin 2020/10**

(51) Int Cl.:
**H02M 7/487** (2007.01)    **H02M 1/38** (2007.01)
**H02M 1/08** (2006.01)

(21) Application number: **18162355.4**

(22) Date of filing: **16.03.2018**

(54) **ACTIVE NEUTRAL POINT CLAMPED INVERTER, ZERO-CROSSING SWITCHING METHOD AND ZERO-CROSSING SWITCHING APPARATUS THEREOF**

AKTIVER NEUTRALPUNKTKLEMMENUMRICHTER, NULLDURCHGANGSSCHALTVERFAHREN UND NULLDURCHGANGSSCHALTVORRICHTUNG DAFÜR

ONDULEUR VERROUILLÉ AU POINT NEUTRE ACTIF, PROCÉDÉ DE COMMUTATION DE PASSAGE PAR ZÉRO ET SON APPAREIL DE COMMUTATION DE PASSAGE PAR ZÉRO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2017 CN 201710291639**

(43) Date of publication of application:
**31.10.2018 Bulletin 2018/44**

(73) Proprietor: **Sungrow Power Supply Co., Ltd.**
**Hefei, Anhui 230088 (CN)**

(72) Inventors:
• **Zhuang, Jiacai**
**Hefei, Anhui 230088 (CN)**
• **Cui, Yuqing**
**Hefei, Anhui 230088 (CN)**
• **Zhao, Deyong**
**Hefei, Anhui 230088 (CN)**
• **Luo, Xiaohui**
**Hefei, Anhui 230088 (CN)**
• **Zhang, Chaoxuan**
**Hefei, Anhui 230088 (CN)**

• **Xu, Jun**
**Hefei, Anhui 230088 (CN)**
• **Gu, Yilei**
**Hefei, Anhui 230088 (CN)**
• **Wang, Xinyu**
**Hefei, Anhui 230088 (CN)**

(74) Representative: **Epping - Hermann - Fischer Patentanwaltsgesellschaft mbH Schloßschmidstraße 5 80639 München (DE)**

(56) References cited:
**US-A1- 2003 165 071    US-A1- 2006 056 209**

• **DANIEL ANDLER ET AL: "Experimental Investigation of the Commutations of a 3L-ANPC Phase Leg Using 4.5-kV 5.5-kA IGCTs", IEEE TRANSACTIONS ON INDUSTRIAL ELECTRONICS, IEEE SERVICE CENTER, PISCATAWAY, NJ, USA, vol. 60, no. 11, 1 November 2013 (2013-11-01), pages 4820-4830, XP011514276, ISSN: 0278-0046, DOI: 10.1109/TIE.2012.2227903**

EP 3 396 840 B1

**Description**

**CROSS REFERENCE TO RELATED APPLICATION**

The present application claims the priority to Chinese Patent Application No. 201710291639.3, titled "ACTIVE NEUTRAL POINT CLAMPED INVERTER, ZERO-CROSSING SWITCHING METHOD AND ZERO-CROSSING SWITCHING APPARATUS THEREOF", filed on April 28, 2017 with the State Intellectual Property Office of the People's Republic of China.

**TECHNICAL FIELD**

The present disclosure relates to the technical field of power electronics, and in particular to an active neutral point clamped inverter, a zero-crossing switching method of the active neutral point clamped inverter and a zero-crossing switching apparatus of the active neutral point clamped inverter.

**BACKGROUND**

As compared with a traditional neutral point clamped (NPC, diode neutral point clamped) inverter, an active neutral point clamped (ANPC) inverter includes a controllable switch device to replace a clamping diode, so as to have a free system control and realize many control objectives.

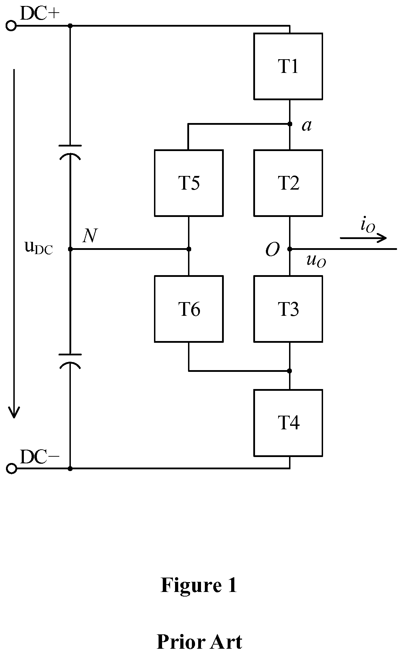

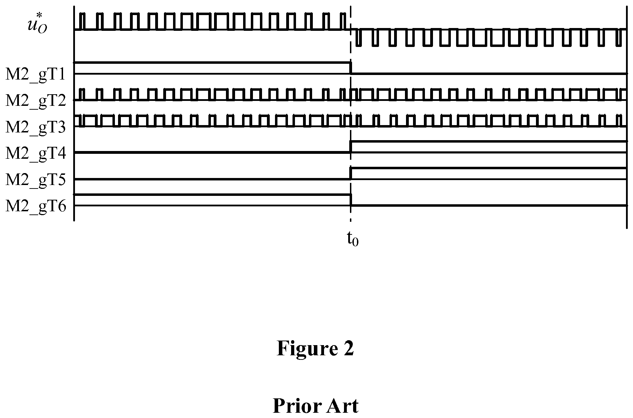

Figure 1 shows a topology of one bridge leg of an ANPC three-level inverter. The bridge leg includes switch devices T1 to T6, in which T1, T2 and T5 are respectively an outer transistor, an inner transistor and a clamping transistor of an upper half bridge leg, and T4, T3 and T6 are respectively an outer transistor, an inner transistor and a clamping transistor of a lower half bridge leg. In order that the bridge leg outputs three levels including $-u_{DC}/2$, 0 and $u_{DC}/2$ (where $u_{DC}$ is a direct-current bus voltage), a modulation scheme that the two inner transistors operate at a high frequency and the two outer transistors and the two clamping transistors operate at a power frequency, is provided in the conventional technology. As an example, Figure 2 shows waveforms (not including a dead zone) of drive signals of the switch devices in the modulation scheme, where $u_O^*$ represents an output voltage instruction of the bridge leg, and M2_gT1 to M2_gT6 represent the waveforms of the drive signals of T1 to T6 in one period of the power frequency respectively.

With this modulation scheme, it can be ensured that a maximum voltage borne by the switch devices is $u_{DC}/2$ in a positive half period and a negative half period of an output voltage of the bridge leg. However, switch states of at least four switch devices in the bridge leg are required to change simultaneously (referring to a time to) when zero-crossing switching occurs in $u_O^*$. It is an ideal case that switching actions of the switch devices can be completed simultaneously, and the maximum voltage borne by T1 to T6 is still $u_{DC}/2$. In fact, some of the switching actions of the switch devices may be completed before others, which results in overvoltage risks of some switch devices.

Blidberg Ingemar et al. (US2006/056209) discloses a method for control of a converter for conversion of dc voltage into ac voltage or dc voltage and vice versa, in which an output of the converter may alternatively be connected to a positive pole, a negative pole or a center of a dc voltage side of the converter in the form of different so-called main states. There is carried out, when changing between main states via a so-called minor commutation loop, an extra sequence in the form of a delayed turn-on of semiconductor elements in one unit of the converter relative to semiconductor elements in another unit in a pair of units of the converter.

Daniel Andler et al. (see "Experimental Investigation of the Commutations of a 3L-ANPC Phase Leg Using 4.5-kV 5.5-kA IGCTs", IEEE TRANSACTIONS ON INDUSTRIAL ELECTRONICS, IEEE SERVICE CENTER, PISCATAWAY, NJ, USA, vol. 60, no. 11, 1 November 2013 (2013-11-01), pages 4820-4830, ISSN: 0278-0046, DOI: 10.1109/TIE.2012.2227903) discloses three-level active neutral-point-clamped voltage-source converters (3L-ANPC-VSC) offering three additional switch states and an increase of commutations by a factor of four, compared to the three-level NPC voltage-source converter. This paper presents a detailed analysis of all 3L-ANPC VSC commutations using high-power 5SHY55L4500 integrated gate-commutated thyristors.

Bernet Steffen et al. (US2003/165071) discloses an open-loop and closed-loop control method for a single-phase or polyphase three-point converter which is connected to a DC voltage intermediate circuit, having two series-connected main switches/inverse diodes between each DC voltage connection and each load connection. The common junction point of the two inner main switches forms the load connection. An active clamped switch with an inverse diode is connected between each common junction point of an inner main switch and an outer main switch and the center tap of the DC voltage intermediate circuit. As a result of which, two possible paths are formed for connecting a load connection to the center tap. Irrespective of the direction of the load current, at least one of the two active clamped switches is connected to the center tap together with at least one inner main switch for connection of a load connection.; The provides a circuit that can carry the current deliberately through the upper path, the lower path, or through both paths, to the center tap during a null state.

## SUMMARY

The invention is defined by the features of method claim 1 and apparatus claim 3. The dependent claims recite advantageous embodiments of the invention. In view of this, an ANPC inverter, a zero-crossing switching method of the ANPC inverter and a zero-crossing switching apparatus of the ANPC inverter are provided according to the present disclosure, so as to prevent an overvoltage phenomenon from occurring in switch devices in any bridge leg of the ANPC inverter when zero-crossing switching occurs in an output voltage instruction of the bridge leg.

A zero-crossing switching method of an active neutral point clamped inverter is provided, which includes: acquiring an output voltage instruction of a bridge leg of the active neutral point clamped inverter; determining whether zero-crossing switching occurs in the output voltage instruction; and controlling switch states of all of switch devices in the bridge leg to change according to a preset logic, in a case that the zero-crossing switching occurs in the output voltage instruction.

The preset logic includes switching among a sequence of switch state combinations. A switch state combination of all of the switch devices in the bridge leg of the active neutral point clamped inverter before the zero-crossing switching occurs in the output voltage instruction of the bridge leg is defined as the first switch state combination of the sequence, and a switch state combination of all of the switch devices in the bridge leg after the zero-crossing switching occurs in the output voltage instruction of the bridge leg is defined as the last switch state combination of the sequence. In transition from the first switch state combination to the last switch state combination. The second switch state combination to the penultimate switch state combination are all safe switch state combinations selected in advance, and in each of the safe switch state combination, a maximum voltage borne by the switch devices in the bridge leg is clamped to a safe limit value.

The safe limit value is one-half of a direct-current bus voltage in a case that the zero-crossing switching method is applied to an active neutral point clamped three-level inverter.

The safe switch state combinations include a switch state combination in which at least one clamping transistor in the bridge leg is switched on and a switch state combination in which only two inner transistors in the bridge leg are switched on.

The switching among the sequence of switch state combinations includes: switching off one of the switch devices which is in a switched-on state in the previous switch state combination, or switching on one of the switch devices which is in a switched-on state in the next switch state combination.

A zero-crossing switching apparatus of an active neutral point clamped inverter is provided, which includes: an acquiring unit configured to acquire an output voltage instruction of a bridge leg of the active neutral point clamped inverter; a determining unit configured to determine whether zero-crossing switching occurs in the output voltage instruction; and a switching control unit configured to control switch states of all of switch devices in the bridge leg to change according to a preset logic, in a case that the determining unit determines that the zero-crossing switching occurs in the output voltage instruction.

The preset logic includes switching among a sequence of switch state combinations. A switch state combination of all of the switch devices in the bridge leg of the active neutral point clamped inverter before the zero-crossing switching occurs in the output voltage instruction of the bridge leg is defined as the first switch state combination of the sequence, and a switch state combination of all of the switch devices in the bridge leg after the zero-crossing switching occurs in the output voltage instruction of the bridge leg is defined as the last switch state combination of the sequence. In transition from the first switch state combination to the last switch state combination. The second switch state combination to the penultimate switch state combination are all safe switch state combinations selected in advance, and in each of the safe switch state combinations, a maximum voltage borne by the switch devices in the bridge leg is clamped to a safe limit value.

The safe limit value is one-half of a direct-current bus voltage in a case that the zero-crossing switching apparatus is applied to an active neutral point clamped three-level inverter.

The safe switch state combinations include a switch state combination in which at least one clamping transistor in the bridge leg is switched on and a switch state combination in which only two inner transistors in the bridge leg are switched on.

The switching among the sequence switch state combinations includes: switching off one of the switch devices which is in a switched-on state in the previous switch state combination, or switching on one of the switch devices which is in a switched-on state in the next switch state combination.

An active neutral point clamped inverter is provided, which includes any one of the zero-crossing switching apparatuses of the active neutral point clamped inverter described above.

The active neutral point clamped inverter is an active neutral point clamped three-level inverter or an active neutral point clamped five-level inverter.

It can be seen from the above technical solutions that, in the present disclosure, when zero-crossing switching occurs in the output voltage instruction of a bridge leg of the ANPC inverter, the switch states of all of the switch devices in the bridge leg are not switched randomly, but switched according to the preset logic. In the preset logic, a maximum voltage borne by the switch devices in the bridge leg is clamped to the safe limit value in the switch state combination at any time, thereby preventing an overvoltage phenomenon from occurring in the switch devices in the bridge leg during the zero-crossing switching.

## BRIEF DESCRIPTION OF THE DRAWINGS

In order to illustrate the technical solutions according to the embodiments of the present disclosure or in the conventional technology more clearly, the drawings required in description of the embodiments or conventional technology are introduced simply below. Apparently, the drawings in the following description show only some embodiments of the present disclosure, and other drawings may be obtained by those skilled in the art based on the provided drawings without creative work.

Figure 1 is a schematic diagram showing a topology of one bridge leg in an ANPC three-level inverter in conventional technology;

Figure 2 is a schematic waveform diagram of drive signals of all of switch devices in conventional technology;

Figure 3 is a flowchart of a zero-crossing switching method of an ANPC inverter according to an embodiment of the present disclosure;

Figure 4 is a schematic waveform diagram of drive signals of all of switch devices operating at a power frequency according to an embodiment of the present disclosure; and

Figure 5 is a schematic structural diagram of a zero-crossing switching apparatus of an ANPC inverter according to an embodiment of the present disclosure.

## DETAILED DESCRIPTION OF THE EMBODIMENTS

The technical solutions according to the embodiments of the present disclosure will be described clearly and completely below in conjunction with the drawings in the embodiments of the present disclosure. It is apparent that the described embodiments are only a part rather than all of the embodiments of the present disclosure. Any other embodiments obtained by those skilled in the art without creative work based on the embodiments of the present disclosure fall within the protection scope of the present disclosure.

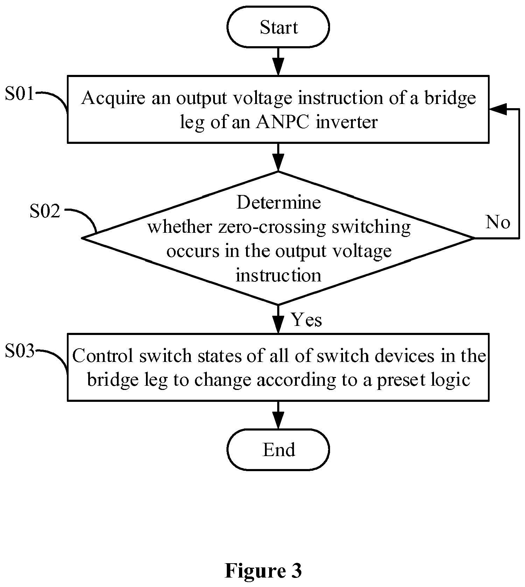

Referring to Figure 3, a zero-crossing switching method of an ANPC inverter is provided according to an embodiment of the present disclosure, to prevent an overvoltage phenomenon from occurring in switch devices in any bridge leg of the ANPC inverter when zero-crossing switching occurs in an output voltage instruction of the bridge leg. The zero-crossing switching method of the ANPC inverter includes steps S01 to S03.

In step S01, an output voltage instruction of a bridge leg of the ANPC inverter is acquired.

In step S02, whether zero-crossing switching occurs in the output voltage instruction is determined. The zero-crossing switching method proceeds to step S03 in a case that the zero-crossing switching occurs in the output voltage instruction, or the zero-crossing switching method returns to step S01 otherwise.

In step S03, switch states of all of switch devices in the bridge leg are controlled to change according to a preset logic.

For convenience of description, a switch state combination of all of the switch devices in a bridge leg of the ANPC inverter before the zero-crossing switching occurs in the output voltage instruction of the bridge leg and a switch state combination of all of the switch devices in the bridge leg after the zero-crossing switching occurs in the output voltage instruction of the bridge leg are respectively defined as the first switch state combination and the last switch state combination. The preset logic includes switching among multiple switch state combinations sequentially in transition from the first switch state combination to the last switch state combination. The second switch state combination to the penultimate switch state combination of the multiple switch state combinations are all safe switch state combinations selected from all of switch state combinations of all of the switch devices in the bridge leg in advance. In each of the safe switch state combinations, a maximum voltage borne by the switch devices in the bridge leg is clamped to a safe limit value.

It can be known from the above description that, in the embodiment, when zero-crossing switching occurs in the output voltage instruction of a bridge leg of the ANPC inverter, the switch states of all of the switch devices in the bridge leg are not switched randomly, but switched according to the preset logic. In the preset logic, a maximum voltage borne by the switch devices in the bridge leg is always clamped to the safe limit value in the switch state combination at any time, thereby preventing an overvoltage phenomenon from occurring in the switch devices in the bridge leg during the zero-crossing switching.

The technical solution in the embodiment is described in detail below with the example of the bridge leg shown in Figure 1.

The bridge leg shown in Figure 1 includes 6 switch devices. System states obtained when different numbers of switch devices are switched on are analyzed, to search for the system state in which a maximum voltage borne by the switch devices in the bridge leg is clamped to $U_{DC}/2$. A switch state combination of all of the switch devices in the bridge leg corresponding to the found system state is a safe switch state combination. In the analysis process, it is assumed hereinafter that each of voltages of an upper voltage dividing capacitor and a lower voltage dividing capacitor of a direct-current bus is $u_{DC}/2$.

1. A system state in a case that only one switch device in the bridge leg shown in Figure 1 is switched on is shown in Table 1.

Table 1

| Switched-on switch devices | Output voltage $u_O$ of bridge leg | | Voltages borne by switch devices | |
|---|---|---|---|---|
| | $i_o>0$ | $i_o>0$ | $i_o>0$ | $i_o>0$ |
| T1 | $-u_{DC}/2$ | $u_{DC}/2$ | $u_{T1}=0, u_{T2}=u_{DC}\ u_{T3}=0, u_{T4}=0$ | $u_{T1}=0, u_{T2}=0\ u_{T3}+u_{T4}=u_{DC}$ |
| T2 | 0 | $u_{DC}/2$ | $u_{T1}=u_{DC}/2, u_{T2}=0\ u_{T3}+u_{T4}=u_{DC}/2$ | $u_{T1}=0, u_{T2}=0\ u_{T3}+u_{T4}=u_{DC}$ |
| T3 | $-u_{DC}/2$ | 0 | $u_{T1}+u_{T2}=u_{DC}\ u_{T3}=0, u_{T4}=0$ | $u_{T1}+u_{T2}=u_{DC}/2\ u_{T3}=0, u_{T4}=0$ |
| T4 | $-u_{DC}/2$ | $u_{DC}/2$ | $u_{T1}+u_{T2}=u_{DC}\ u_{T3}=0, u_{T4}=0$ | $u_{T1}=0, u_{T2}=0\ u_{T3}=u_{DC}, u_{T4}=0$ |
| <u>T5</u> | $-u_{DC}/2$ | 0 | $u_{T1}=u_{DC}/2, u_{T2}=u_{DC}/2\ u_{T3}=0, u_{T4}=0$ | $u_{T1}=u_{DC}/2, u_{T2}=0\ u_{T3}+u_{T4}=u_{DC}/2$ |
| <u>T6</u> | 0 | $-u_{DC}/2$ | $u_{T1}+u_{T2}=u_{DC}/2\ u_{T3}=0, u_{T4}=u_{DC}/2$ | $u_{T1}=0, u_{T2}=0\ u_{T3}=u_{DC}/2, u_{T4}=u_{DC}/2$ |

A case that only T1 is switched on is taken as an example. An output voltage of the bridge leg is $u_O=-u_{DC}/2$ in a case that a current of the bridge leg is $i_o>0$, in which case, a voltage borne by T1 is $u_{T1}=0$, a voltage borne by T2 is $u_{T2}=u_{DC}$, a voltage borne by T3 is $u_{T3}=0$, and a voltage borne by T4 is $u_{T4}=0$. $u_O=u_{DC}/2$ in a case of $i_o<0$, in which case, a voltage borne by T1 is $u_{T1}=0$, a voltage borne by T2 is $u_{T2}=0$, and a voltage borne by T3 and T4 together is $u_{T3}+u_{T4}=u_{DC}$. Because $u_{T2}=u_{DC}$ occurs, that is, an overvoltage phenomenon occurs in T2, the switch state combination that only T1 is switched on cannot serve as a safe switch state combination of all of the switch devices in the bridge leg. In addition, in a case of $u_{T3}+u_{T4}=u_{DC}$, it is ideal that each of T3 and T4 bears a voltage of $u_{DC}/2$. In practice, since there is always a certain difference between parameters of the switch devices, an overvoltage phenomenon that the voltage borne by one of T3 and T4 is greater than $u_{DC}/2$ occurs in practice, which also confirms that the switch state combination that only T1 is switched on cannot serve as a safe switch state combination of all of the switch devices in the bridge leg.

It can be seen from Table 1 that, in the case that only one switch device is switched on, the switch state combination that only T5 or T6 is switched on can serve as a safe switch state combination of all of the switch devices in the bridge leg, which is indicated in an underlined manner in Table 1.

2. A system state in a case that two switch devices in the bridge leg shown in Figure 1 are both switched on is shown in Table 2.

In a case that two switch devices in the bridge leg shown in Figure 1 are both switched on, a condition that an outer transistor and a clamping transistor at the same side are not both switched on should be met, otherwise a bus capacitor at the side is short-circuited. Therefore, the cases that "T1 and T5 are both switched on" and "T4 and T6 are both switched on" are not considered in Table 2.

Table 2

| Switched-on switch devices | Output voltage $u_O$ of bridge leg | | Voltages borne by switch devices | |
|---|---|---|---|---|
| | $i_o>0$ | $i_o>0$ | $i_o>0$ | $i_o>0$ |
| T1, T2 | $u_{DC}/2$ | $u_{DC}/2$ | $u_{T1}=0$, $u_{T2}=0$ $u_{T3}+u_{T4}=u_{DC}$ | $u_{T1}=0$, $u_{T2}=0$ $u_{T3}+u_{T4}=u_{DC}$ |
| T1, T3 | $-u_{DC}/2$ | 0 | $u_{T1}=0$, $u_{T2}=u_{DC}$ $u_{T3}=0$, $u_{T4}=0$ | $u_{T1}=0$, $u_{T2}=u_{DC}/2$ $u_{T3}=0$, $u_{T4}=u_{DC}/2$ |
| T1, T4 | $-u_{DC}/2$ | $u_{DC}$ | $u_{T1}=0$, $u_{T2}=u_{DC}$ $u_{T3}=0$, $u_{T4}=0$ | $u_{T1}=0$, $u_{T2}=0$ $u_{T3}=u_{DC}$, $u_{T4}=0$ |
| <u>T1, T6</u> | 0 | $u_{DC}/2$ | $u_{T1}=0$, $u_{T2}=u_{DC}/2$ $u_{T3}=0$, $u_{T4}=u_{DC}/2$ | $u_{T1}=0$, $u_{T2}=0$ $u_{T3}=u_{DC}/2$, $u_{T4}=u_{DC}/2$ |
| <u>T2, T3</u> | 0 | 0 | $u_{T1}=u_{DC}/2$, $u_{T2}=0$ $u_{T3}=0$, $u_{T4}=u_{DC}/2$ | $u_{T1}=u_{DC}/2$, $u_{T2}=0$ $u_{T3}=0$, $u_{T4}=u_{DC}/2$ |
| T2, T4 | 0 | $u_{DC}/2$ | $u_{T1}=u_{DC}/2$, $u_{T2}=0$ $u_{T3}=u_{DC}/2$, $u_{T4}=0$ | $u_{T1}=0$, $u_{T2}=0$ $u_{T3}=u_{DC}$, $u_{T4}=0$ |
| <u>T2, T5</u> | 0 | 0 | $u_{T1}=u_{DC}/2$, $u_{T2}=0$ $u_{T3}+u_{T4}=u_{DC}/2$ | $u_{T1}=u_{DC}/2$, $u_{T2}=0$ $u_{T3}+u_{T4}=u_{DC}/2$ |
| <u>T2, T6</u> | 0 | $u_{DC}/2$ | $u_{T1}=u_{DC}/2$, $u_{T2}=0$ $u_{T3}=0$, $u_{T4}=u_{DC}/2$ | $u_{T1}=0$, $u_{T2}=0$ $u_{T3}=u_{DC}/2$, $u_{T4}=u_{DC}/2$ |
| T3, T4 | $-u_{DC}/2$ | $-u_{DC}/2$ | $u_{T1}+u_{T2}=u_{DC}$ $u_{T3}=0$, $u_{T4}=0$ | $u_{T1}+u_{T2}=u_{DC}$ $u_{T3}=0$, $u_{T4}=0$ |
| <u>T3, T5</u> | $-u_{DC}/2$ | 0 | $u_{T1}=u_{DC}/2$, $u_{T2}=u_{DC}/2$ $u_{T3}=0$, $u_{T4}=0$ | $u_{T1}=u_{DC}/2$, $u_{T2}=0$ $u_{T3}=0$, $u_{T4}=u_{DC}/2$ |
| <u>T3, T6</u> | 0 | 0 | $u_{T1}+u_{T2}=u_{DC}/2$ $u_{T3}=0$, $u_{T4}=u_{DC}/2$ | $u_{T1}+u_{T2}=u_{DC}/2$ $u_{T3}=0$, $u_{T4}=u_{DC}/2$ |
| <u>T4, T5</u> | $-u_{DC}/2$ | 0 | $u_{T1}=u_{DC}/2$, $u_{T2}=u_{DC}/2$ $u_{T3}=0$, $u_{T4}=0$ | $u_{T1}=u_{DC}/2$, $u_{T2}=0$ $u_{T3}=u_{DC}/2$, $u_{T4}=0$ |
| <u>T5, T6</u> | 0 | 0 | $u_{T1}=u_{DC}/2$, $u_{T2}=0$ $u_{T3}=0$, $u_{T4}=u_{DC}/2$ | $u_{T1}=u_{DC}/2$, $u_{T2}=0$ $u_{T3}=0$, $u_{T4}=u_{DC}/2$ |

It can been seen from Table 2 that, in a case that only two switch devices are switched on, the switch state combinations that "T1 and T6 are both switched on", "T2 and T3 are both switched on", "T2 and T5 are both switched on", "T2 and T6 are both switched on", "T3 and T5 are both switched on", "T3 and T6 are both switched on", "T4 and T5 are both switched on" and "T5 and T6 are both switched on" may serve as safe switch state combinations of all of the switch devices in the bridge leg, which are indicated in an underlined manner in Table 2.

3. A system state in a case that three switch devices in the bridge leg shown in Figure 1 are all switched on is shown in Table 3.

In a case that the three switch devices in the bridge leg shown in Figure 1 are all switched on, in addition to the condition that the outer transistor and the clamping transistor at the same side are not both switched on, a condition that two outer transistors and one inner transistor are not all switched on and two inner transistors and one outer transistor are not all switched on should be met, otherwise it is inevitable that one of the switch devices directly bears a direct-current bus voltage $u_{DC}$. Therefore, the cases that "T1 and T5 are both switched on", "T4 and T6 are both switched on" and "any three of T1 to T4 are all switched on" are not considered in Table 3.

Table 3

| Switched-on switch devices | Output voltage $u_O$ of bridge leg | | Voltages borne by switch devices | |
|---|---|---|---|---|
| | $i_o>0$ | $i_o>0$ | $i_o>0$ | $i_o>0$ |
| <u>T1, T2, T6</u> | $u_{DC}/2$ | $u_{DC}/2$ | $u_{T1}=0$, $u_{T2}=0$ $u_{T3}=u_{DC}/2$, $u_{T4}=u_{DC}/2$ | $u_{T1}=0$, $u_{T2}=0$ $u_{T3}=u_{DC}/2$, $u_{T4}=u_{DC}/2$ |

(continued)

| Switched-on switch devices | Output voltage $u_O$ of bridge leg | | Voltages borne by switch devices | |
|---|---|---|---|---|
| | $i_o>0$ | $i_o>0$ | $i_o>0$ | $i_o>0$ |
| T1, T3, T6 | 0 | 0 | $u_{T1}=0$, $u_{T2}=u_{DC}/2$ $u_{T3}=0$, $u_{T4}=u_{DC}/2$ | $u_{T1}=0$, $u_{T2}=u_{DC}/2$ $u_{T3}=0$, $u_{T4}=u_{DC}/2$ |
| T2, T3, T5 | 0 | 0 | $u_{T1}=u_{DC}/2$, $u_{T2}=0$ $u_{T3}=0$, $u_{T4}=u_{DC}/2$ | $u_{T1}=u_{DC}/2$, $u_{T2}=0$ $u_{T3}=0$, $u_{T4}=u_{DC}/2$ |
| T2, T3, T6 | 0 | 0 | $u_{T1}=u_{DC}/2$, $u_{T2}=0$ $u_{T3}=0$, $u_{T4}=u_{DC}/2$ | $u_{T1}=u_{DC}/2$, $u_{T2}=0$ $u_{T3}=0$, $u_{T4}=u_{DC}/2$ |
| T2, T4, T5 | 0 | 0 | $u_{T1}=u_{DC}/2$, $u_{T2}=0$ $u_{T3}=0$, $u_{T4}=u_{DC}/2$ | $u_{T1}=u_{DC}/2$, $u_{T2}=0$ $u_{T3}=0$, $u_{T4}=u_{DC}/2$ |
| T2, T5, T6 | 0 | 0 | $u_{T1}=u_{DC}/2$, $u_{T2}=0$ $u_{T3}=0$, $u_{T4}=u_{DC}/2$ | $u_{T1}=u_{DC}/2$, $u_{T2}=0$ $u_{T3}=0$, $u_{T4}=u_{DC}/2$ |
| T3, T4, T5 | $-u_{DC}/2$ | $-u_{DC}/2$ | $u_{T1}=u_{DC}/2$, $u_{T2}=u_{DC}/2$ $u_{T3}=0$, $u_{T4}=0$ | $u_{T1}=u_{DC}/2$, $u_{T2}=u_{DC}/2$ $u_{T3}=0$, $u_{T4}=0$ |
| T3, T5, T6 | 0 | 0 | $u_{T1}=u_{DC}/2$, $u_{T2}=0$ $u_{T3}=0$, $u_{T4}=u_{DC}/2$ | $u_{T1}=u_{DC}/2$, $u_{T2}=0$ $u_{T3}=0$, $u_{T4}=u_{DC}/2$ |

It can be seen from Table 3 that each of the switch state combinations listed in Table 3 is a safe switch state combination, which are indicated in an underlined manner in the Table 3.

4. In a case that four switch devices in the bridge leg shown in Figure 1 are all switched on, only one switch state combination that T2, T3, T5 and T6 are all switched on is a safe switch state combination. In such case, an output voltage of the bridge leg is $u_O$ =0, and voltages borne by the switch devices are: $u_{T1}=u_{DC}/2$, $u_{T1}=0$, $u_{T3}=0$ and $u_{T4}=u_{DC}/2$.

5. The bus capacitor is short-circuited in a case that five or more switch devices in the bridge leg shown in Figure 1 are all switched on, and therefore there is no safe switch state combination.

6. There is no safe switch state combination in a case that no switch device in the bridge leg shown in Figure 1 is switched on, for the reason as follows.

In a case that no switch device in the bridge leg shown in Figure 1 is switched on, which switch device has a switched-on antiparallel diode is determined by a freewheeling circuit. In a case that $i_o$ flows out from point O, antiparallel diodes of T3 and T4 are switched on, a voltage at point O is equal to a negative bus voltage, and T1 and T2 bear the direct-current bus voltage $u_{DC}$ together. Since an antiparallel diode of T5 is not switched on, a level at point $a$ is unknown. If there is a difference between parasite parameters of the transistors T1 and T2, it cannot be ensured that each of T1 and T2 bears a voltage of $u_{DC}/2$, that is, there is no safe switch state combination. Similarly, a case that $i_o$ flows into point O can be analyzed.

In summary, all of the safe switch state combinations of all of the switch devices in the bridge leg shown in Figure 1 are enumerated in Table 4.

Table 4

| The number of switched-on transistor devices | 1 | 2 | 3 | 4 |
|---|---|---|---|---|
| Switched-on transistor devices | T5; T6; | T1, T6; T2, T3; T2, T5; T2, T6; T3, T5; T3, T6; T4, T5; T5, T6; | T1, T2, T6; T1, T3, T6; T2, T3, T5; T2, T3, T6; T2, T4, T5; T2, T5, T6; T3, T4, T5; T3, T5, T6; | T2, T3, T5, T6; |

It can be known from the above description that, in a case that the ANPC inverter is an ANPC three-level inverter, a safe switch state combination of all the switch devices in a bridge leg refers to a switch state combination in which a maximum voltage borne by the switch devices is clamped to $u_{DC}/2$. Based on this criterion, a switch state combination that at least one clamping transistor in the bridge leg is switched on and a switch state combination that only two inner transistors in the bridge leg are switched on may be selected as safe switch state combinations.

When positive-to-negative zero-crossing switching occurs in the output voltage instruction of the bridge leg shown in Figure 1, it can be known from Figure 2 that T1 and T6 are both switched on in the first switch state combination, and T4 and T5 are all switched on in the last stage switch state combination. Therefore, switching actions to be completed during the zero-crossing switching includes: switching off T1 and T6 and switching on T4 and T5. Since a switch state of only one switch device can be changed at a time instant, it can be known from Table 4 that, in the positive-to-negative zero-crossing switching, a switching among multiple switch state combinations may be switching from "T1, T6" (the first switch state combination) to "T6" (the second switch state combination), then to "T5, T6" (the third switch state combination), then to "T5" (the fourth switch state combination), and then to "T4, T5" (the last switch state combination).

When negative-to-positive zero-crossing switching occurs in the output voltage instruction of the bridge leg shown in Figure 1, it can be known from Figure 2 that T4 and T5 are both switched on in the first switch state combination, and T1 and T6 are both switched on in the last switch state combination. Therefore, switching actions to be completed in the zero-crossing switching includes: switching off T4 and T5 and switching on T1 and T6. Since a switch state of only one switch device can be changed at a time instant, it can be known from Table 4 that, in the negative-to-positive zero-crossing switching, a switching among multiple switch state combinations may be switching from "T4, T5" (the first switch state combination) to "T5" (the second switch state combination), then to "T5, T6" (the third switch state combination), then to "T6" (the fourth switch state combination), and then to "T1, T6" (the last switch state combination).

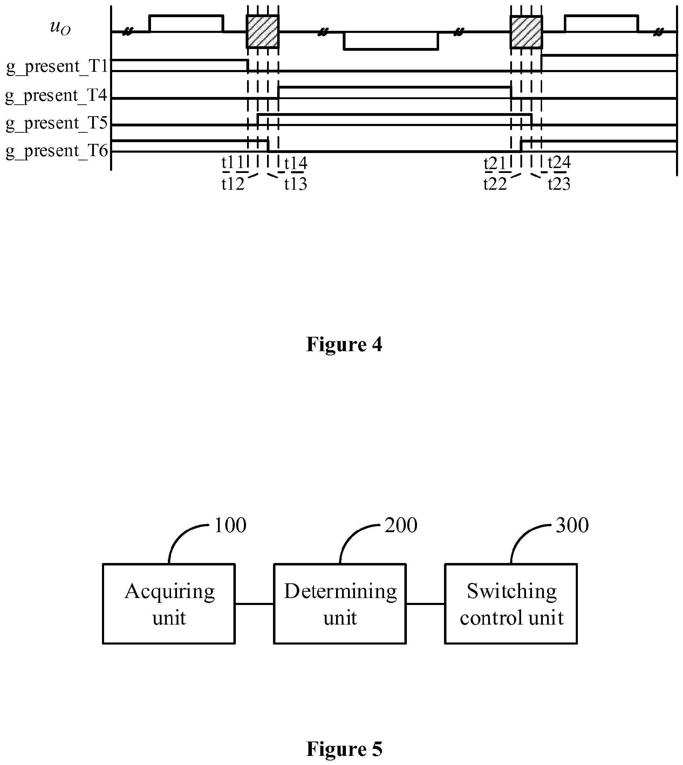

Corresponding to the above switching manners of the multiple switch state combinations, Figure 4 shows waveforms (g_present_T1, g_present_T4, g_present_T5 and g_present_T6 represent waveforms of drive signals of T1, T4, T5 and T6 respectively) of drive signals of all of switch devices operating at a power frequency. The switching time are illustrated as follows.

(1) In a case that positive-to-negative zero-crossing switching occurs in the output voltage instruction of the bridge leg shown in Figure 1, T1 is first switched off at a time t11, then T5 is switched on at a time t12, then T6 is switched off at a time t13, and finally T4 is switched on at a time t14.

(2) In a case that negative-to-positive zero-crossing switching occurs in the output voltage instruction of the bridge leg shown in Figure 1, T4 is first switched off at a time t21, then T6 is switched on at a time t22, then T5 is switched off at a time t23, and finally T1 is switched on at a time t24.

The magnitude of an output voltage of the bridge leg in the zero-crossing switching is related to switch states of the high-frequency switch devices T2 and T3, which is shaded in Figure 4.

Extending the above switching manner of the multiple switch state combinations to be applied in any type of ANPC inverter, the switching manner may be switching off one switch device which is in a switched-on state in a previous switch state combination, or switching on one switch device which is in a switched-on in a next switch state combination.

It should be noted that the above switching manner of the multiple switch state combinations is only an example, and other switching manner may also be adopted. For example, when positive-to-negative zero-crossing switching occurs in the output voltage instruction of the bridge leg shown in Figure 1, the switching manner of the multiple switch state combinations may also be switching from "T1, T2, T6" (the first stage switch state combination) to "T2, T6" (the second switch state combination), then to "T2, T5, T6" (the third switch state combination), then to"T2, T5" (the fourth switch state combination), and finally to "T2, T4, T5" (the last switch state combination). When negative-to-positive zero-crossing switching occurs in the output voltage instruction of the bridge leg shown in Figure 1, the switching manner of the multiple switch state combinations may also be switching from "T2, T4, T5" (the first switch state combination) to "T2, T5" (the second switch state combination), then to "T2, T5, T6" (the third switch state combination), then to "T2, T6" (the fourth switch state combination), and finally to "T1, T2, T6" (the last switch state combination).

Referring to Figure 5, a zero-crossing switching apparatus of an ANPC inverter is further provided according to an embodiment of the present disclosure, which includes an acquiring unit 100, a determining unit 200 and a switching control unit 300.

The acquiring unit 100 is configured to acquire an output voltage instruction of a bridge leg of the ANPC inverter.

The determining unit 200 is configured to determine whether zero-crossing switching occurs in the output voltage instruction.

The switching control unit 300 is configured to control switch states of all of switch devices in the bridge leg to change according to a preset logic, in a case that the determining unit 200 determines that the zero-crossing switching occurs in the output voltage instruction.

Specifically, a switch state combination of all of the switch devices in a bridge leg of the ANPC inverter before the zero-crossing switching occurs in the output voltage instruction of the bridge leg and a switch state combination of all of the switch devices in the bridge leg after the zero-crossing switching occurs in the output voltage instruction of the bridge leg are respectively defined as the first switch state combination and the last switch state combination. The preset logic includes switching among multiple switch state combinations sequentially in transition from the first switch state combination to the last switch state combination. The second switch state combination to the penultimate switch state combination of the multiple switch state combinations are safe switch state combinations selected from all of switch state combinations of all of the switch devices in the bridge leg in advance. In each of the safe switch state combinations, a maximum voltage borne by the switch devices in the bridge leg is clamped to a safe limit value.

The safe limit value is one-half of a direct-current bus voltage in a case that the zero-crossing switching apparatus is applied to an ANPC three-level inverter.

The safe switch state combination includes a switch state combination in which at least one clamping transistor in the bridge leg is switched on and a switch state combination in which only two inner transistors in the bridge leg are switched on.

The switching among the multiple switch state combinations includes: switching off one switch device which is in a switched-on state in the previous switch state combination, or switching on one switch device which is in a switched-on state in the next switch state combination.

In addition, an ANPC inverter is further provided according to an embodiment of the present disclosure, which includes any one of the zero-crossing switching apparatus of the ANCP inverter described above. The ANPC inverter may be an ANPC three-level inverter or an ANPC five-level inverter, which is not limited herein.

In summary, in the present disclosure, when zero-crossing switching occurs in the output voltage instruction of a bridge leg of the ANPC inverter, the switch states of all of the switch devices in the bridge leg are not switched randomly, but switched according to the preset logic. In the preset logic, a maximum voltage borne by the switch devices in the bridge leg is always clamped to the safe limit value in the switch state combination at any time, thereby preventing an overvoltage phenomenon from occurring in the switch devices in the bridge leg during the zero-crossing switching.

The embodiments of the present disclosure are described in a progressive manner, and each embodiment is focused on describing difference from other embodiments, and reference may be made one to another for the same or similar parts among the embodiments. Since the apparatus disclosed in the embodiment corresponds to the method disclosed in the embodiment, the description for the apparatus is simple, and reference may be made to the method in the embodiment for the relevant parts.

Based on the above description of the embodiments, those skilled in the art can implement or use the present disclosure. Therefore, the present disclosure is not limited to the embodiments described herein, but conforms to the widest scope consistent with the principles and novel features disclosed herein.

**Claims**

1. A zero-crossing switching method of an active neutral point clamped three-level inverter, wherein the active neutral point clamped three-level inverter comprises a bridge leg comprising two half-bridge legs, each of the two half-bridge legs comprises switch devices comprising an outer transistor (T1, T4), an inner transistor (T2, T3) and a clamping transistor (T5, T6), a voltage applied on the bridge leg is a direct-current bus voltage ($U_{DC}$),
   each outer transistor (T1, T4) is connected to a respective first or second terminals of the direct-current bus, each inner transistor (T2, T3) is connected to an output terminal of the active neutral point clamped three-level inverter, and each clamping transistor (T5, T6) is connected to a midpoint connection between respective outer and inner transistors and to a midpoint between the first and the second terminals of the direct-current bus,
   and wherein the zero-crossing switching method comprises:

   acquiring (S01) an output voltage instruction of the bridge leg of the active neutral point clamped inverter;
   determining (S02) whether zero-crossing switching occurs in the output voltage instruction; and
   controlling (S03) switch states of all of the switch devices in the bridge leg to change according to a preset logic, in a case that the zero-crossing switching occurs in the output voltage instruction; wherein
   the preset logic comprises switching among a sequence of switch state combinations, a switch state combination of all of the switch devices in the bridge leg of the active neutral point clamped inverter before the zero-crossing switching occurs in the output voltage instruction of the bridge leg is defined as the first switch state combination of the sequence, and a switch state combination of all of the switch devices in the bridge leg after the zero-crossing switching occurs in the output voltage instruction of the bridge leg is defined as the last switch state combination of the sequence,
   in transition from the first switch state combination to the last switch state combination, the second switch state combination to the penultimate switch state combination are all safe switch state combinations selected in advance, and in each of the safe switch state combinations, a maximum voltage borne by the switch devices in the bridge leg is clamped to a safe limit value,
the safe limit value is one-half of the direct-current bus voltage ($U_{DC}$), and
the zero-crossing switching method is **characterized in that** the safe switch state combinations are one of the following combinations: a switch state combination in which at least one clamping transistor (T5, T6) in the bridge leg is switched on, or a switch state combination in which only two inner transistors (T2, T3) in the bridge leg are switched on.

2. The zero-crossing switching method of the active neutral point clamped three-level inverter according to claim 1, wherein the switching among the sequence of switch state combinations comprises:

switching off one of the switch devices which is in a switched-on state in the previous switch state combination; or
switching on one of the switch devices which is in a switched-on state in the next switch state combination.

3. A zero-crossing switching apparatus of an active neutral point clamped three-level inverter, wherein the active neutral point clamped three-level inverter comprises a bridge leg comprising two half-bridge legs, each of the two half-bridge legs comprises switch devices comprising an outer transistor (T1, T4), an inner transistor (T2, T3) and a clamping transistor (T5, T6), a voltage applied on the bridge leg is a direct-current bus voltage ($U_{DC}$),
each outer transistor (T1, T4) is connected to a respective first or second terminals of the direct-current bus, each inner transistor (T2, T3) is connected to an output terminal of the active neutral point clamped three-level inverter, and each clamping transistor (T5, T6) is connected to a midpoint connection between respective outer and inner transistors and to a midpoint between the first and the second terminals of the direct-current bus,
and wherein the zero-crossing switching apparatus comprises:

an acquiring unit (100) configured to acquire an output voltage instruction of the bridge leg of the active neutral point clamped inverter;
a determining unit (200) configured to determine whether zero-crossing switching occurs in the output voltage instruction; and
a switching control unit (300) configured to control switch states of all of the switch devices in the bridge leg to change according to a preset logic, in a case that the determining unit determines that the zero-crossing switching occurs in the output voltage instruction; wherein
the preset logic comprises switching among a sequence of switch state combinations, a switch state combination of all of the switch devices in the bridge leg of the active neutral point clamped inverter before the zero-crossing switching occurs in the output voltage instruction of the bridge leg is defined as the first switch state combination of the sequence, and a switch state combination of all of the switch devices in the bridge leg after the zero-crossing switching occurs in the output voltage instruction of the bridge leg is defined as the last switch state combination of the sequence,
in transition from the first switch state combination to the last switch state combination, the second switch state combination to the penultimate switch state combination are all safe switch state combinations selected in advance, and in each of the safe switch state combinations, a maximum voltage borne by the switch devices in the bridge leg is clamped to a safe limit value,
the safe limit value is one-half of the direct-current bus voltage ($U_{DC}$), and
the zero-crossing switching apparatus is **characterized in that** the safe switch state combinations are one of the following combinations: a switch state combination in which at least one clamping transistor (T5, T6) in the bridge leg is switched on, or a switch state combination in which only two inner transistors (T2, T3) in the bridge leg are switched on.

4. The zero-crossing switching apparatus of the active neutral point clamped three-level inverter according to claim 3, wherein the switching among the sequence of the switch state combinations comprises:

switching off one of the switch devices which is in a switched-on state in the previous switch state combination; or
switching on one of the switch devices which is in a switched-on state in the next switch state combination.

5. An active neutral point clamped three-level inverter, comprising the zero-crossing switching apparatus according to any one of claims 3 to 4.

**Patentansprüche**

1. Nulldurchgangsschaltverfahren eines aktiven Dreipunkt-Neutralpunktklemmumrichters, wobei der aktive Dreipunkt-Neutralpunktklemmumrichter einen Brückenschenkel umfasst, der zwei Halbbrückenschenkel umfasst, wobei jeder der zwei Halbbrückenschenkel Schaltvorrichtungen umfasst, die einen äußeren Transistor (T1, T4), einen inneren Transistor (T2, T3) und einen Klemmtransistor (T5, T6) umfassen, wobei eine an den Brückenschenkel angelegte Spannung eine Gleichstrom-Busspannung ($U_{DC}$) ist, wobei jeder äußere Transistor (T1, T4) mit einem entsprechenden ersten und zweiten Pol des Gleichstrom-Bus verbunden ist, jeder innere Transistor (T2, T3) mit einem Ausgangspol des Dreipunkt-Neutralpunktklemmumrichters verbunden ist und jeder Klemmtransistor (T5, T6) mit einer Mittelpunktschaltung zwischen dem entsprechenden äußeren und inneren Transistor und mit einem Mittelpunkt zwischen dem ersten und dem zweiten Pol des Gleichstrom-Bus verbunden ist, und wobei das Nulldurchgangsschaltverfahren Folgendes umfasst:

   Erfassen (S01) einer Ausgangsspannungsvorgabe des Brückenschenkels des aktiven Neutralpunktklemmumrichters;
   Bestimmen (S02), ob Nulldurchgangsschalten in der Ausgangsspannungsvorgabe auftritt; und
   Steuern (S03) von Schaltzuständen aller Schaltvorrichtungen in dem Brückenschenkel zum Ändern gemäß einer voreingestellten Logik, in einem Fall, dass das Nulldurchgangsschalten in der Ausgangsspannungsvorgabe auftritt; wobei
   die voreingestellte Logik Schalten zwischen einer Sequenz von Schaltzustandskombinationen umfasst, wobei eine Schaltzustandskombination aller Schaltvorrichtungen in dem Brückenschenkel des aktiven Neutralpunktklemmumrichters, bevor das Nulldurchgangsschalten in der Ausgangsspannungsvorgabe des Brückenschenkels auftritt, definiert ist als die erste Schaltzustandskombination der Sequenz, und wobei eine Schaltzustandskombination aller Schaltvorrichtungen in dem Brückenschenkel, nachdem das Nulldurchgangsschalten in der Ausgangsspannungsvorgabe des Brückenschenkels auftritt, definiert ist als die letzte Schaltzustandskombination der Sequenz,
   beim Übergang von der ersten Schaltzustandskombination zur letzten Schaltzustandskombination, die zweite Schaltzustandskombination bis zur vorletzten Schaltzustandskombination alle sichere Schaltzustandskombinationen sind, die im Voraus ausgewählt wurden, und wobei in jeder der sicheren Schaltzustandskombinationen eine maximale Spannung, die die Schaltvorrichtungen im Brückenschenkel führen, auf einen sicheren Grenzwert geklemmt wird,
   der sichere Grenzwert eine Hälfte der Gleichstrom-Busspannung ($U_{DC}$) ist, und
   das Nulldurchgangsschaltverfahren **dadurch gekennzeichnet ist, dass** es sich bei den sicheren Schaltzustandskombinationen um eine der folgenden Kombinationen handelt: eine Schaltzustandskombination, in der mindestens ein Klemmtransistor (T5, T6) in dem Brückenschenkel angeschaltet ist, oder eine Schaltzustandskombination, in der lediglich zwei innere Transistoren (T2, T3) in dem Brückenschenkel angeschaltet sind.

2. Nulldurchgangsschaltverfahren des aktiven Dreipunkt-Neutralpunktklemmumrichters nach Anspruch 1, wobei das Schalten zwischen der Sequenz der Schaltzustandskombinationen Folgendes umfasst:

   Abschalten einer der Schaltvorrichtungen, die sich in der vorherigen Schaltzustandskombination in einem angeschalteten Zustand befindet; oder
   Anschalten einer der Schaltvorrichtungen, die sich in der nächsten Schaltzustandskombination in einem angeschalteten Zustand befindet.

3. Nulldurchgangsschaltvorrichtung eines aktiven Dreipunkt-Neutralpunktklemmumrichters, wobei der aktive Dreipunkt-Neutralpunktklemmumrichter einen Brückenschenkel umfasst, der zwei Halbbrückenschenkel umfasst, wobei jeder der zwei Halbbrückenschenkel Schaltvorrichtungen umfasst, die einen äußeren Transistor (T1, T4), einen inneren Transistor (T2, T3) und einen Klemmtransistor (T5, T6) umfassen, wobei eine an den Brückenschenkel angelegte Spannung eine Gleichstrom-Busspannung ($U_{DC}$) ist, wobei jeder äußere Transistor (T1, T4) mit einem entsprechenden ersten und zweiten Pol des Gleichstrom-Bus verbunden ist, jeder innere Transistor (T2, T3) mit einem Ausgangspol des Dreipunkt-Neutralpunktklemmumrichters verbunden ist und jeder Klemmtransistor (T5, T6) mit einer Mittelpunktschaltung zwischen dem entsprechenden äußeren und inneren Transistor und mit einem Mittelpunkt zwischen dem ersten und dem zweiten Pol des Gleichstrom-Bus verbunden ist, und wobei die Nulldurchgangsschaltvorrichtung Folgendes umfasst:

   eine Erfassungseinheit (100), die dazu konfiguriert ist, eine Ausgangsspannungsvorgabe des Brückenschenkels des aktiven Neutralpunktklemmumrichters zu erfassen;

eine Bestimmungseinheit (200), die dazu konfiguriert ist, zu bestimmen, ob Nulldurchgangsschalten in der Ausgangsspannungsvorgabe auftritt; und

eine Schaltsteuereinheit (300), die dazu konfiguriert ist, Schaltzustände aller Schaltvorrichtungen in dem Brückenschenkel zum Ändern gemäß einer voreingestellten Logik zu steuern, in einem Fall, dass die Bestimmungseinheit bestimmt, dass das Nulldurchgangsschalten in der Ausgangsspannungsvorgabe auftritt; wobei die voreingestellte Logik Schalten zwischen einer Sequenz von Schaltzustandskombinationen umfasst, wobei eine Schaltzustandskombination aller Schaltvorrichtungen in dem Brückenschenkel des aktiven Neutralpunktklemmumrichters, bevor das Nulldurchgangsschalten in der Ausgangsspannungsvorgabe des Brückenschenkels auftritt, definiert ist als die erste Schaltzustandskombination der Sequenz, und wobei eine Schaltzustandskombination aller Schaltvorrichtungen in dem Brückenschenkel, nachdem das Nulldurchgangsschalten in der Ausgangsspannungsvorgabe des Brückenschenkels auftritt, definiert ist als die letzte Schaltzustandskombination der Sequenz,

beim Übergang von der ersten Schaltzustandskombination zur letzten Schaltzustandskombination, die zweite Schaltzustandskombination bis zur vorletzten Schaltzustandskombination alle sichere Schaltzustandskombinationen sind, die im Voraus ausgewählt wurden, und wobei in jeder der sicheren Schaltzustandskombinationen eine maximale Spannung, die die Schaltvorrichtungen im Brückenschenkel führen, auf einen sicheren Grenzwert geklemmt wird,

der sichere Grenzwert eine Hälfte der Gleichstrom-Busspannung ($U_{DC}$) ist, und

die Nulldurchgangsschaltvorrichtung **dadurch gekennzeichnet ist, dass** es sich bei den sicheren Schaltzustandskombinationen um eine der folgenden Kombinationen handelt: eine Schaltzustandskombination, in der mindestens ein Klemmtransistor (T5, T6) in dem Brückenschenkel angeschaltet ist, oder eine Schaltzustandskombination, in der lediglich zwei innere Transistoren (T2, T3) in dem Brückenschenkel angeschaltet sind.

4. Nulldurchgangsschaltvorrichtung des aktiven Dreipunkt-Neutralpunktklemmumrichters nach Anspruch 3, wobei das Schalten zwischen der Sequenz der Schaltzustandskombinationen Folgendes umfasst:

Abschalten einer der Schaltvorrichtungen, die sich in der vorherigen Schaltzustandskombination in einem angeschalteten Zustand befindet; oder
Anschalten einer der Schaltvorrichtungen, die sich in der nächsten Schaltzustandskombination in einem angeschalteten Zustand befindet.

5. Aktiver Dreipunkt-Neutralpunktklemmumrichter, umfassend die Nulldurchgangsschaltvorrichtung nach einem der Ansprüche 3 bis 4.

## Revendications

1. Méthode de commutation de passage au zéro d'un onduleur actif à trois niveaux fixé au point neutre, dans laquelle l'onduleur actif fixé à trois niveaux au point neutre comprend une branche de pont comprenant deux demi-branches de pont, chacune des deux demi-branches de pont comprend des dispositifs de commutation comprenant un transistor externe (T1, T4), un transistor interne (T2, T3) et un transistor de fixation (T5, T6), une tension appliquée sur la branche de pond est une tension de bus à courant continu ($U_{DC}$), chaque transistor externe (T1, T4) est relié à une première ou seconde borne respective du bus à courant continu, chaque transistor interne (T2, T3) est relié à une borne de sortie de l'onduleur actif à trois niveaux fixé au point neutre, et chaque transistor de fixation (T5, T6) est relié sur une connexion médiane entre les transistors externes et internes respectifs et sur une médiane entre les première et seconde bornes du bus à courant continu, et dans laquelle la méthode de commutation de passage au zéro comprend :

l'acquisition (S01) d'une instruction de tension de sortie de la branche de pont de l'onduleur actif fixé au point neutre ;
la détermination (S02) si la commutation de passage au zéro se produit dans l'instruction de tension de sortie ; et
le contrôle (S03) des états de commutation de tous les dispositifs de commutation dans la branche de pont, en vue d'une modification selon une logique prédéfinie dans un cas où la commutation de passage au zéro se produit dans l'instruction de tension de sortie ; dans laquelle
la logique prédéfinie comprend la commutation au sein d'une séquence de combinaisons d'états de commutation, une combinaison d'états de commutation de tous les dispositifs de commutation dans la branche de pont de l'onduleur actif fixé au point neutre avant que la commutation de passage au zéro ne se produise dans l'instruction de tension de sortie de la branche de pont est définie comme la première combinaison d'état de commutation de la séquence, et une combinaison d'état de commutation de tous les dispositifs de commutation dans la branche de pont après que la commutation de passage au zéro ne se produise dans l'instruction de tension de sortie de la branche de pont est définie comme la dernière combinaison d'état de commutation de la séquence,

dans la transition de la première combinaison d'état de commutation de la séquence à la dernière combinaison d'état de commutation de la séquence, la seconde combinaison d'état de commutation à l'avant-dernière combinaison d'état de commutation sont toutes des combinaisons d'état de commutation sûres sélectionnées en avance, et dans chacune des combinaisons d'état de commutation sûres, une tension maximum portée par les dispositifs de commutation dans la branche de pont est fixée à une valeur limite sûre,

la valeur limite de sécurité est la moitié de la tension de bus à courant continu ($U_{DC}$), et

la méthode de commutation de passage au zéro est **caractérisée en ce que** les combinaisons d'états de commutation de sécurité sont une des combinaisons suivantes : une combinaison d'état de commutation dans laquelle au moins un transistor de fixation (T5, T6) dans la branche de pont est activé, ou une combinaison d'état de commutation dans laquelle seulement deux transistors internes (T2, T3) dans la branche de pont sont activés.

2. Méthode de commutation de passage au zéro de l'onduleur actif à trois niveaux fixé au point neutre selon la revendication 1, dans laquelle la commutation au sein de la séquence des combinaisons d'états de commutation comprend :

la désactivation d'un des dispositifs de commutation qui est dans un état activé dans la combinaison précédente d'état de commutation ; ou

l'activation d'un des dispositifs de commutation qui est dans un état activé dans la combinaison suivante d'état de commutation.

3. Appareil de commutation de passage au zéro d'un onduleur actif à trois niveaux fixé au point neutre, dans laquelle l'onduleur actif fixé à trois niveaux au point neutre comprend une branche de pont comprenant deux demi-branches de pont, chacune des deux demi-branches de pont comprend des appareils de commutation comprenant un transistor externe (T1, T4), un transistor interne (T2, T3) et un transistor de fixation (T5, T6), une tension appliquée sur la branche de pond est une tension de bus à courant continu ($U_{DC}$), chaque transistor externe (T1, T4) est relié à une première ou seconde borne respective du bus à courant continu, chaque transistor interne (T2, T3) est relié à une borne de sortie de l'onduleur actif à trois niveaux fixé au point neutre, et chaque transistor de fixation (T5, T6) est relié sur une connexion médiane entre les transistors externes et internes respectifs et sur une médiane entre les première et seconde bornes du bus à courant continu, et dans lequel l'appareil de commutation de passage au zéro comprend :

une unité d'acquisition (100) configurée pour acquérir une instruction de tension de sortie de la branche de pont de l'onduleur actif fixé au point neutre ;

une unité de détermination (200) configurée pour déterminer si la commutation de passage au zéro se produit dans l'instruction de tension de sortie ; et

une unité de contrôle de commutation (300) configurée pour contrôler les états de commutation de tous les appareils de commutation dans la branche de pont, en vue d'une modification selon une logique prédéfinie dans un cas où l'unité de détermination détermine que la commutation de passage au zéro se produit dans l'instruction de tension de sortie ; dans lequel

la logique prédéfinie comprend la commutation au sein d'une séquence de combinaisons d'états de commutation, une combinaison d'états de commutation de tous les dispositifs de commutation dans la branche de pont de l'onduleur actif fixé au point neutre avant que la commutation de passage au zéro ne se produise dans l'instruction de tension de sortie de la branche de pont est définie comme la première combinaison d'état de commutation de la séquence, et une combinaison d'état de commutation de tous les dispositifs de commutation dans la branche de pont après que la commutation de passage au zéro ne se produise dans l'instruction de tension de sortie de la branche de pont est définie comme la dernière combinaison d'état de commutation de la séquence,

dans la transition de la première combinaison d'état de commutation de la séquence à la dernière combinaison d'état de commutation de la séquence, la seconde combinaison d'état de commutation à l'avant-dernière combinaison d'état de commutation sont toutes des combinaisons d'état de commutation sûres sélectionnées en avance, et dans chacune des combinaisons d'état de commutation sûres, une tension maximum portée par les dispositifs de commutation dans la branche de pont est fixée à une valeur limite sûre,

la valeur limite de sécurité est la moitié de la tension de bus à courant continu ($U_{DC}$), et

l'appareil de commutation de passage au zéro est **caractérisé en ce que** les combinaisons d'états de commutation de sécurité sont une des combinaisons suivantes : une combinaison d'état de commutation dans laquelle au moins un transistor de fixation (T5, T6) dans la branche de pont est activé, ou une combinaison d'état de commutation dans laquelle seulement deux transistors internes (T2, T3) dans la branche de pont sont activés.

4. Appareil de commutation de passage au zéro de l'onduleur actif à trois niveaux fixé au point neutre selon la revendication 3, dans lequel la commutation au sein de la séquence des combinaisons d'états de commutation comprend :

la désactivation d'un des dispositifs de commutation qui est dans un état activé dans la combinaison précédente d'état de commutation ; ou
l'activation d'un des dispositifs de commutation qui est dans un état activé dans la combinaison suivante d'état de commutation.

5. Onduleur actif à trois niveaux fixé au point neutre, comprenant l'appareil de commutation de passage au zéro selon une quelconque des revendications 3 à 4.

**Figure 1**

**Prior Art**

**Figure 2**

**Prior Art**

Start

S01 — Acquire an output voltage instruction of a bridge leg of an ANPC inverter

S02 — Determine whether zero-crossing switching occurs in the output voltage instruction

No

Yes

S03 — Control switch states of all of switch devices in the bridge leg to change according to a preset logic

End

**Figure 3**

**Figure 4**

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201710291639
- US 2006056209 A, Blidberg Ingemar
- US 2003165071 A, Bernet Steffen

### Non-patent literature cited in the description

- Experimental Investigation of the Commutations of a 3L-ANPC Phase Leg Using 4.5-kV 5.5-kA IGCTs. IEEE TRANSACTIONS ON INDUSTRIAL ELECTRONICS. IEEE SERVICE CENTER, 01 November 2013, vol. 60, 4820-4830